# EUROPEAN PATENT APPLICATION

(11) **EP 4 428 855 A1**
(43) Date of publication of application: **11.09.2024**
(21) Application number: 21965961.2
(22) Date of filing: 30.11.2021
(51) Int. Cl.: G10L 15/22, G10L 17/22, G10L 17/14

(54) **DEVICE CONTROL METHOD AND APPARATUS**

(71) Applicant: Huawei Technologies Co., Ltd., Shenzhen, Guangdong 518129 (CN)
(72) Inventor: TANG, Qiuyuan, Shenzhen, Guangdong 518129 (CN); SHEN, Yun, Shenzhen, Guangdong 518129 (CN); BAO, Yonghui, Shenzhen, Guangdong 518129 (CN)
(74) Representative: Isarpatent
(86) International application number: PCT/CN2021/134663
(87) International publication number: WO 2023/097524

(57) **Abstract**

This application provides a device control method and an apparatus, to reduce power consumption and resource occupation in a multi-device wake-up scenario, and enhance seamless user experience. The method includes: A vehicle-mounted device obtains voice information of a first user, where the voice information indicates to perform a first operation; the vehicle-mounted device determines a target device from a plurality of candidate devices based on the voice information, where the plurality of candidate devices include the vehicle-mounted device and at least one terminal device; and when the target device belongs to the at least one terminal device, the vehicle-mounted device sends indication information to the target device, where the indication information indicates the target device to perform the first operation, or when the target device is the vehicle-mounted device, the vehicle-mounted device performs the first operation.

## Description

### TECHNICAL FIELD

This application relates to the field of intelligent control, and in particular, to a device control method and an apparatus.

### BACKGROUND

With development of intelligent control technologies, more intelligent devices exist in a same scenario. For example, a mobile phone, a smart watch, a smart headset, and a tablet computer that are of a same user, or intelligent devices used by different users all exist in a vehicle-mounted scenario or a smart home scenario. In this case, a plurality of intelligent devices may use a same wake-up word. When the user performs wake-up, the plurality of devices may simultaneously respond. This causes poor user experience.

For a multi-device wake-up scenario, a general solution is to determine a response solution based on a distance between a device and a user or based on a preset device priority. For example, in the vehicle-mounted scenario, the user wakes up a device by using a voice. In this case, a wake-up engine of each device is in an enabled state, and each device may be woken up after receiving the voice. The woken-up device may send wake-up information by using broadcast information, where the wake-up information includes a type of the device and a sound pressure intensity. All the devices may use same wake-up decision logic. After obtaining broadcast information of other devices, each device may determine, based on priority information of the device and the received broadcast information, whether to respond to the voice of the user. Finally, a device that decides to respond to the voice makes a response, and performs subsequent identification and responding.

However, the foregoing solution has many disadvantages. For example, selecting a device only based on a sound intensity cannot meet an intelligent selection requirement of multi-device collaboration. In a noisy environment, a proportional relationship between a sound intensity and a distance is weakened, leading to an inaccurate determining result. In addition, simultaneous working of the wake-up engines of all the devices causes a waste of computing power, and power consumption and resource occupation of a single device are high. Therefore, an optimized intelligent control solution for a multi-device wake-up scenario is urgently needed in the industry.

### SUMMARY

This application provides a device control method and an apparatus, to reduce power consumption and resource occupation in a multi-device wake-up scenario, and enhance seamless user experience.

According to a first aspect, a device control method is provided. The method includes: A vehicle-mounted device obtains voice information of a first user, where the voice information indicates to perform a first operation; the vehicle-mounted device determines a target device from a plurality of candidate devices based on the voice information, where the plurality of candidate devices include the vehicle-mounted device and at least one terminal device; and when the target device belongs to the at least one terminal device, the vehicle-mounted device sends indication information to the target device, where the indication information indicates the target device to perform the first operation, or when the target device is the vehicle-mounted device, the vehicle-mounted device performs the first operation.

In a multi-device wake-up scenario, the candidate device hosts a wake-up engine to the vehicle-mounted device to perform wake-up determining and wake-up responding. The vehicle-mounted device is responsible for wake-up determining and wake-up responding of the candidate device, and after making a decision, the vehicle-mounted device performs the decision or sends a decision result to the terminal device. In this solution, only the vehicle-mounted device needs to enable a wake-up engine, thereby reducing power consumption and resource occupation of the candidate device, and enhancing seamless user experience. It may be understood that the terminal device may be wired or wirelessly connected to the vehicle-mounted device or a vehicle to which the vehicle-mounted device belongs, but the terminal device does not belong to the vehicle.

With reference to the first aspect, in a possible implementation of the first aspect, the at least one terminal device has registered registration information with the vehicle-mounted device.

In the multi-device wake-up scenario, the terminal device may register information with the vehicle-mounted device in advance, so that the vehicle-mounted device performs wake-up determining and wake-up responding in the multi-device scenario based on the registration information, and after making a decision, the vehicle-mounted device performs the decision or sends a decision result to the terminal device. In this solution, power consumption and resource occupation of the candidate device can be reduced, and seamless user experience is enhanced.

With reference to the first aspect, in a possible implementation of the first aspect, the registration information includes account information, and the account information includes at least one of the following: an account identifier of a user, voiceprint feature information of the user, and facial image feature information of the user.

The registration information sent by the terminal device to the vehicle-mounted device includes the account identifier of the user, the voiceprint feature information of the user, the facial image feature information of the user, and the like, so that the vehicle-mounted device makes a decision based on the account information when performing wake-up determining and wake-up responding, thereby improving accuracy of a collaboration policy in the multi-device scenario.

With reference to the first aspect, in a possible implementation of the first aspect, the registration information further includes device information, and the device information includes at least one of the following: a device type and media access control (Media Access Control, MAC) address information.

With reference to the first aspect, in a possible implementation of the first aspect, the method further includes: The vehicle-mounted device sends search information to the terminal device, where the search information indicates the terminal device to register with the vehicle-mounted device; and the vehicle-mounted device receives the registration information from the terminal device.

With reference to the first aspect, in a possible implementation of the first aspect, the voice information indicates reference information corresponding to the target device. The reference information includes at least one of the following: intent information, indicating an intent of the voice information; a wake-up word, used to wake up the vehicle-mounted device, where the wake-up word belongs to a plurality of wake-up words, and there is a preset correspondence between the plurality of wake-up words and the plurality of candidate devices; and user identity information, indicating an identity of the first user. That the vehicle-mounted device determines a target device from a plurality of candidate devices based on the voice information includes: The vehicle-mounted device determines the target device from the plurality of candidate devices based on the reference information.

The vehicle-mounted device serves as the only responding device, and may make a decision based on the wake-up word, the intent information corresponding to the voice information, and the user identity information, to determine the target device that performs the first operation indicated by the voice information. In this solution, seamless user experience can be enhanced, and accuracy of a collaboration policy in the multi-device scenario is improved.

With reference to the first aspect, in a possible implementation of the first aspect, that the vehicle-mounted device determines the target device from the plurality of candidate devices based on the reference information includes: The vehicle-mounted device determines a first candidate device subset from the plurality of candidate devices based on the intent information, where a type of a candidate device in the first candidate device subset corresponds to the intent information; and the vehicle-mounted device determines the target device from the first candidate device subset based on the user identity information.

The vehicle-mounted device may narrow down, based on the intent information, a list range of candidate devices corresponding to the voice information, and then further determine the target device based on the user identity information, to improve intelligence of identifying the target device, enhance seamless user experience, and improve user experience.

With reference to the first aspect, in a possible implementation of the first aspect, that the vehicle-mounted device determines the target device from the plurality of candidate devices based on the reference information includes: The vehicle-mounted device determines a second candidate device subset corresponding to the wake-up word, where there is a preset correspondence between the wake-up word and a candidate device in the second candidate device subset; and the vehicle-mounted device determines the target device from the second candidate device subset based on at least one of the intent information and the user identity information.

With reference to the first aspect, in a possible implementation of the first aspect, that the vehicle-mounted device obtains the reference information based on the voice information includes: The vehicle-mounted device obtains, based on the voice information, at least one piece of the following user feature information: sound source positioning information of the first user, voiceprint feature information of the first user, and facial image feature information of the first user; and the vehicle-mounted device determines the user identity information based on the at least one piece of user feature information.

With reference to the first aspect, in a possible implementation of the first aspect, a wake-up engine in the vehicle-mounted device is enabled, and a wake-up engine in the at least one terminal device is disabled.

In the multi-device wake-up scenario, the wake-up engine of the terminal device may be disabled, and only the wake-up engine of the vehicle-mounted device is retained, thereby reducing resource occupation and power consumption of the terminal device.

According to a second aspect, a device control method is provided. The method includes: A terminal device sends registration information to a vehicle-mounted device, where the registration information is used by the terminal device to register with the vehicle-mounted device; and the terminal device receives indication information from the vehicle-mounted device, where the indication information indicates the terminal device to perform a first operation, and the first operation includes an operation that is indicated to be performed in voice information of a first user.

In the multi-device wake-up scenario, the terminal device may register information with the vehicle-mounted device in advance, so that the vehicle-mounted device performs wake-up determining and wake-up responding in the multi-device scenario based on the registration information, and after making a decision, the vehicle-mounted device sends a decision result to the terminal device. In this solution, power consumption and resource occupation of the candidate device can be reduced, and seamless user experience is enhanced. The terminal device may be wired or wirelessly connected to the vehicle-mounted device or a vehicle, but the terminal device does not belong to the vehicle.

With reference to the second aspect, in a possible implementation of the second aspect, the registration information includes account information, and the account information includes at least one of the following: an account identifier of a user, voiceprint feature information of the user, and facial image feature information of the user.

With reference to the second aspect, in a possible implementation of the second aspect, the registration information further includes device information, and the device information includes at least one of the following: a device type and MAC address information.

With reference to the second aspect, in a possible implementation of the second aspect, the method further includes: The terminal device disables a wake-up engine of the terminal device after sending the registration information, where the wake-up engine is configured to respond to voice information of the user.

With reference to the second aspect, in a possible implementation of the second aspect, the method further includes: The terminal device receives search information sent by the vehicle-mounted device, where the search information indicates the terminal device to register with the vehicle-mounted device.

According to a third aspect, a vehicle-mounted device is provided. The vehicle-mounted device includes a module configured to perform the method according to the first aspect or any possible implementation of the first aspect.

According to a fourth aspect, a terminal device is provided. The terminal device includes a module configured to perform the method according to the second aspect or any possible implementation of the second aspect.

According to a fifth aspect, a vehicle-mounted device is provided. The device includes a communication interface and a processor. The processor is configured to invoke a computer program from a memory. When the computer program is executed, the processor is configured to perform the method according to the first aspect or any possible implementation of the first aspect.

According to a sixth aspect, a terminal device is provided. The terminal device includes a communication interface and a processor. The processor is configured to invoke a computer program from a memory. When the computer program is executed, the processor is configured to perform the method according to the second aspect or any possible implementation of the second aspect.

According to a seventh aspect, a computer-readable storage medium is provided, configured to store a computer program. The computer program includes code used to perform the method according to the first aspect or any possible implementation of the first aspect.

According to an eighth aspect, a computer-readable storage medium is provided, configured to store a computer program. The computer program includes code used to perform the method according to the second aspect or any possible implementation of the second aspect.

According to a ninth aspect, a vehicle is provided. The vehicle includes the vehicle-mounted device according to the third aspect or any possible implementation of the third aspect, and the vehicle-mounted device according to the fifth aspect or any possible implementation of the fifth aspect.

According to a tenth aspect, a computer program product is provided, including a computer program. The computer program includes code used to perform the method according to the first aspect or any possible implementation of the first aspect and the method according to the second aspect or any possible implementation of the second aspect.

### BRIEF DESCRIPTION OF DRAWINGS

FIG. 1 is a schematic diagram of an application scenario according to an embodiment of this application;
FIG. 2 is a schematic diagram of a smart home scenario according to an embodiment of this application;
FIG. 3 is a schematic diagram of a vehicle scenario according to an embodiment of this application;
FIG. 4 is a schematic flowchart of a device control method according to an embodiment of this application;
FIG. 5 is a schematic flowchart in which a terminal device registers with a vehicle-mounted device according to an embodiment of this application;
FIG. 6 is a specific flowchart of a device control method according to an embodiment of this application;
FIG. 7 is a schematic block diagram of an apparatus 700 according to another embodiment of this application;
FIG. 8 is a schematic block diagram of an apparatus 800 according to another embodiment of this application; and
FIG. 9 is a schematic block diagram of an apparatus 900 according to another embodiment of this application.

### DESCRIPTION OF EMBODIMENTS

The following describes technical solutions of this application with reference to accompanying drawings.

A terminal device in embodiments of this application may be user equipment, an access terminal, a subscriber unit, a subscriber station, a mobile station, a mobile console, a remote station, a remote terminal, a mobile device, a user terminal, a terminal, a wireless communication device, a user agent, or a user apparatus. The terminal device may alternatively be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, a wearable device, a vehicle, a terminal device in a future 5G network, a terminal device in a future evolved public land mobile network (Public Land Mobile Network, PLMN), or the like. This is not limited in embodiments of this application.

The solutions in embodiments of this application are applicable to a multi-device wake-up scenario, for example, a vehicle-mounted scenario or a smart home scenario.

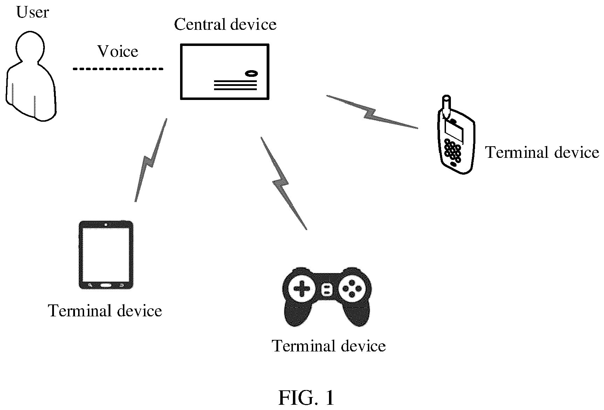

FIG. 1 is a schematic diagram of an application scenario according to an embodiment of this application. As shown in FIG. 1, the application scenario includes a central device and at least one terminal device. The central device and the terminal device may communicate with each other. For example, the central device may be a vehicle-mounted device or a device in a smart home scenario, for example, includes a head unit in a vehicle-mounted scenario or a set-top box in the smart home scenario, or may be any terminal device having a communication function. The head unit may be a vehicle-mounted domain controller and a control system of the vehicle-mounted domain controller that are installed in the vehicle, and may implement communication between a person and the vehicle and between the vehicle and the outside.

The terminal device includes but is not limited to the following items: a mobile phone, a tablet computer, a wearable device, a smart watch, a smart headset, a home appliance, or another device having a communication function.

A wake-up engine may be disposed in each of the central device and the terminal device. For example, when the wake-up engine works, a user may wake up, by using a voice, the central device or the terminal device to respond to a request of the user. The wake-up engine may be a program that is disposed in the device and that is used to respond to voice information of the user. The wake-up engine may be configured to: detect a user voice keyword and respond accordingly based on the user voice keyword. When the wake-up engine is enabled, the wake-up engine needs to continuously monitor the voice information of the user, and consequently, both resource occupation and power consumption are high, especially in a multi-microphone scenario.

In some examples, a difference between the central device and the terminal device lies in the following: The central device needs to be responsible for responding to the voice information of the user, and after analyzing the voice information, the central device performs an operation indicated by the voice information, or indicates a corresponding terminal device to perform an operation. The terminal device does not need to respond to the voice information of the user, and only needs to perform an operation based on an indication of the central device. Therefore, the central device may enable the wake-up engine of the central device, and the terminal device may disable the wake-up engine of the terminal device, to reduce power consumption and computing power.

In some examples, the central device and the terminal device have no essential difference in terms of hardware. For example, one terminal device may be selected from several terminal devices as the central device, and other terminal devices send registration information to the central device.

Optionally, the central device and the terminal devices may belong to a same user, or may belong to different users.

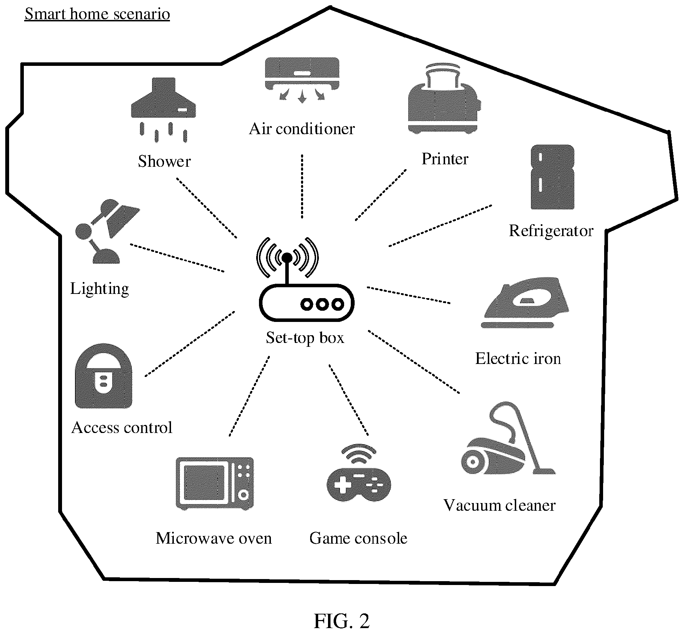

FIG. 2 is a schematic diagram of a smart home scenario according to an embodiment of this application. As shown in FIG. 2, in the smart home scenario, a set-top box may be set as a central device. Certainly, another device (for example, a smart screen) may alternatively be selected as the central device. A terminal device may include but is not limited to the following items: electronic devices with a wireless communication function, such as an air conditioner, a printer, a refrigerator, an electric iron, a vacuum cleaner, a game console, a microwave oven, an access control system, a lighting system, and a shower system. Each device may send registration information to the set-top box. Then, the set-top box is responsible for responding to and analyzing voice information of a user, and indicating a corresponding device to perform an operation indicated by the voice information.

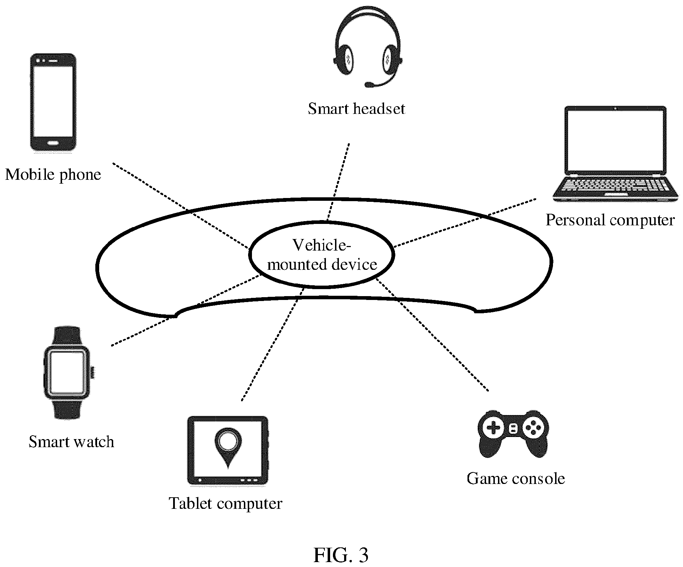

FIG. 3 is a schematic diagram of a vehicle scenario according to an embodiment of this application. As shown in FIG. 3, in a vehicle, a central device may include a vehicle-mounted device, and the vehicle-mounted device may be a head unit or another device disposed in the vehicle. A terminal device may include but is not limited to the following items: a mobile phone, a personal computer, a tablet computer, a game console, a smart watch, and a smart headset. After detecting that the terminal device enters the vehicle, the terminal device may send registration information to the vehicle-mounted device, and disable a wake-up engine of the terminal device. The vehicle-mounted device is responsible for responding to voice information of a user and performing unified allocation, to enhance seamless user experience.

The following describes the method in embodiments of this application by using an example in which the central device is a vehicle-mounted device. It should be understood that the vehicle-mounted device in the following may alternatively be replaced with another type of central device, for example, a set-top box or a smart screen in the smart home scenario.

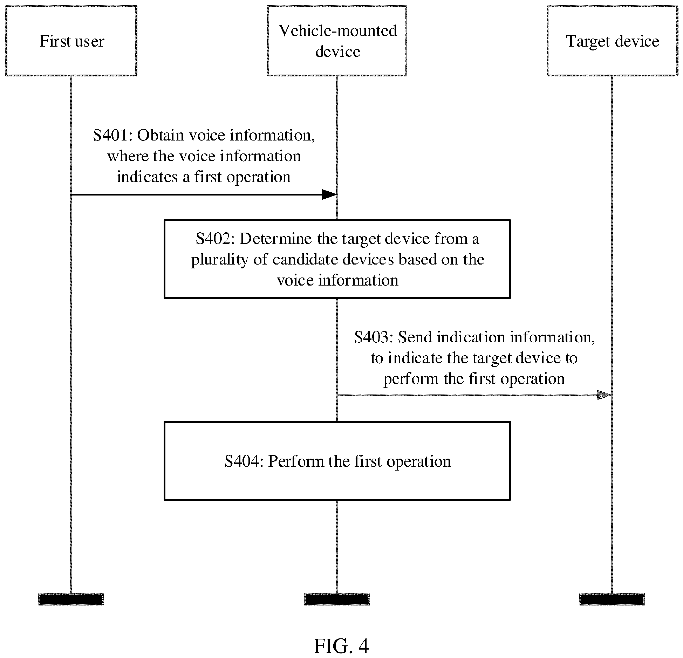

FIG. 4 is a schematic flowchart of a device control method according to an embodiment of this application. A vehicle-mounted device in FIG. 4 may be a head unit or another device disposed in a vehicle, provided that the vehicle-mounted device has a communication function and a processing function. As shown in FIG. 4, the method includes the following content.

S401: The vehicle-mounted device obtains voice information of a first user, where the voice information indicates to perform a first operation.

Optionally, the voice information may include a wake-up word, and the wake-up word may be used to wake up the vehicle-mounted device. After capturing the wake-up word, the vehicle-mounted device may respond to the wake-up word. Optionally, the vehicle-mounted device may further perform semantic analysis on the voice information to obtain intent information. The intent information indicates an intent of the first user, that is, performing the first operation.

Specific content of the first operation is not limited in this application. The first operation may be any indication sent by the first user. For example, the first operation may be playing music, making a call, adjusting a temperature of an air conditioner, or the like.

S402: The vehicle-mounted device determines a target device from a plurality of candidate devices based on the voice information, where the plurality of candidate devices include the vehicle-mounted device and at least one terminal device.

Optionally, the at least one terminal device has registered registration information with the vehicle-mounted device. The registration information is used by each terminal device to register with the vehicle-mounted device. For example, the registration information may include device information and/or account information of the terminal device. As an example, Table 1 shows content registered by the terminal device with the vehicle-mounted device. As shown in Table 1, the device information may include a device type, MAC address information, and the like. The account information may include an account identifier (identifier, ID) of the user, voiceprint feature information of the user, facial image feature information of the user, or the like. It should be understood that proper addition or deletion of the information required for registration falls within the protection scope of embodiments of this application. The following continues to describe a specific registration process of the terminal device with reference to the accompanying drawings.

**Table 1**

| Number | Device information | Account information |
|---|---|---|
| Device 1 | Device type and MAC address information | Account identifier of a user, voiceprint feature information of the user, and facial image feature information of the user |
| Device 2 | Device type and MAC address information | Identifier of a user, voiceprint feature information of the user, and facial image feature information of the user |
| ... | ... | ... |

Optionally, when detecting that the terminal device is nearby, for example, detecting that a distance between the terminal device and the vehicle-mounted device is less than a preset threshold, the vehicle-mounted device may send search information to the terminal device, where the search information indicates the terminal device to register with the vehicle-mounted device. After receiving the search information, the terminal device may send registration information to the vehicle-mounted device. The registration information may include the foregoing device information and/or account information, so that the vehicle-mounted device registers related information of the terminal device.

S403: When the target device belongs to the at least one terminal device, the vehicle-mounted device sends indication information to the target device, where the indication information indicates the target device to perform the first operation.

Optionally, it may be set that the vehicle-mounted device enables a wake-up engine, and the at least one terminal device disables a wake-up engine. In other words, only the vehicle-mounted device is responsible for responding to voice information of the user, and all other devices disable the wake-up engines, to reduce power consumption.

In some examples, after registering with the vehicle-mounted device, the terminal device may disable the wake-up engine of the terminal device.

In some other examples, when the terminal device detects that the distance between the terminal device and the vehicle-mounted device is greater than or equal to the preset threshold, that is, when the terminal device has left a multi-device environment covered by the vehicle-mounted device, the terminal device may enable the wake-up engine of the terminal device again, to independently respond to a wake-up word. The foregoing preset threshold may be set based on practice. This is not specifically limited in this application.

In this embodiment of this application, in a multi-device scenario, the wake-up engine of the terminal device may be disabled, and only the wake-up engine of the vehicle-mounted device is retained, thereby reducing resource occupation and power consumption of the terminal device.

S404: When the target device is the vehicle-mounted device, the vehicle-mounted device performs the first operation.

In this embodiment of this application, in a multi-device wake-up scenario, the terminal device hosts the wake-up engine to the vehicle-mounted device to perform wake-up determining and wake-up responding. The terminal device may register information with the vehicle-mounted device in advance. The vehicle-mounted device is responsible for wake-up determining and wake-up responding of the terminal device, and after making a decision, the vehicle-mounted device sends a decision result to the target device. In this solution, only the vehicle-mounted device needs to enable a wake-up engine, thereby reducing power consumption and resource occupation of the terminal device.

In some examples, the vehicle-mounted device and the at least one terminal device are located in a same local area network. The local area network may be a wired local area network or a wireless local area network, or may be a combination of a wired local area network and a wireless local area network.

In S402, the vehicle-mounted device may determine the target device from the plurality of candidate devices in a plurality of implementations. For example, the voice information may indicate reference information corresponding to the target device, and the reference information includes at least one of the following:
intent information, indicating an intent of the voice information, where the intent information is obtained by performing semantic analysis on the voice information;
a wake-up word, used to wake up the vehicle-mounted device, where the wake-up word belongs to a plurality of wake-up words, and there is a preset correspondence between the plurality of wake-up words and the plurality of candidate devices; and
user identity information, indicating identity information of the user.

The vehicle-mounted device may determine the target device from the plurality of candidate devices based on the reference information.

In this embodiment of this application, the vehicle-mounted device serves as the only responding device, and may make a decision based on the wake-up word, the intent information corresponding to the voice information, and the user identity information, to determine the target device that performs the first operation indicated by the voice information. In this solution, seamless user experience can be enhanced, and accuracy of a collaboration policy in the multi-device wake-up scenario is improved.

In some examples, the vehicle-mounted device may perform semantic analysis on the voice information to obtain the corresponding intent information, and then determine the target device from the plurality of candidate devices based on the intent information. The intent information may be understood as information indicating an intent of the user. For example, the voice information of the user may be playing music. However, the vehicle-mounted device needs to perform semantic analysis on the voice information to understand the intent of the user.

In some examples, that the vehicle-mounted device determines a target device from a plurality of candidate devices based on the voice information includes: The vehicle-mounted device performs semantic analysis on the voice information, to obtain the intent information corresponding to the voice information; and the vehicle-mounted device determines the target device from the plurality of candidate devices based on the intent information.

A device may determine an operation intent of the user based on the intent information. The intent information may indicate, in an explicit or implicit manner, a type of a device with which the user wants to interact. For example, when the intent information indicates "Control the atmospheric light", the indicated device type is a vehicle-mounted device. When the intent information indicates "View health information", the indicated device type is a mobile phone. When the intent information indicates "Make a call", the indicated device may be a mobile phone or a vehicle-mounted device. The vehicle-mounted device may further determine, based on historical calls made by the user, whether the indicated device is the mobile phone or the vehicle-mounted device. In addition, when there is a clear keyword indicating the device type in the intent information, the target device or the type of the target device may be directly determined. For example, the intent information indicates "Make a call by using a mobile phone", "Check weather by using a tablet computer", or the like.

Optionally, the vehicle-mounted device may further determine the target device from the plurality of candidate devices based on the intent information and the user identity information, to improve efficiency of determining the target device.

In some examples, the vehicle-mounted device determines a first candidate device subset from the plurality of candidate devices based on the intent information, where a type of a candidate device in the first candidate device subset corresponds to the intent information; and the vehicle-mounted device determines the target device from the first candidate device subset based on the user identity information.

For example, the vehicle-mounted device may determine the type of the target device based on the intent information, and then is associated, based on the user identity information, with a device corresponding to the user identity information, to further determine the target device.

In this embodiment of this application, the vehicle-mounted device may narrow down, based on the intent information, a list range of candidate devices corresponding to the voice information, and then further determine the target device based on the user identity information, to improve intelligence of identifying the target device, enhance seamless user experience, and improve user experience.

Optionally, the vehicle-mounted device may obtain the user identity information in the following manner. The vehicle-mounted device obtains, based on the voice information, at least one piece of the following user feature information: sound source positioning information of the first user, voiceprint feature information of the first user, and facial image feature information of the first user. The vehicle-mounted device determines the user identity information based on the at least one piece of user feature information.

In an example, the sound source positioning information of the user may indicate a position of the user in a scenario, and the scenario may be an in-vehicle scenario or an indoor scenario. The facial image feature information of the user may be obtained based on the corresponding position. Then, an identity of the user sitting at the position may be determined by comparing a facial feature with the facial image feature information of the user in the registration information stored in the vehicle-mounted device. Correspondingly, whether the user at the corresponding position is in a speaking state may be further verified based on an open/closed state of a lip of the user, to determine whether the user feature information is correct.

In another example, the identity of the user may also be determined by comparing a voiceprint feature of a speaking voice with a voiceprint feature in the registration information stored in the vehicle-mounted device.

Optionally, the foregoing manner of obtaining the user identity information may be independently completed by the vehicle-mounted device, or may be completed by the vehicle-mounted device in cooperation with another device. For example, the vehicle-mounted device may obtain the facial image feature information of the user by using a camera, and obtain the sound source positioning information and the voiceprint feature information of the user by using a microphone.

In this embodiment of this application, the vehicle-mounted device may fully use a sound source feature and a voiceprint feature of the voice information to obtain the user feature information, to determine the user identity information based on the user feature information, and determine the target device based on the user identity information. This improves intelligence in a multi-device wake-up scenario, and improves user experience.

Optionally, the voice information may further include a wake-up word. The wake-up word may be a specific word or sound clip in the voice information, and the word or sound clip may be used to wake up a specific device. In this embodiment of this application, the wake-up word is used to wake up the vehicle-mounted device. In addition, apart from playing a function of waking up the vehicle-mounted device, the wake-up word may also be used to distinguish between different devices. For example, a plurality of wake-up words may be set, and there may be a preset correspondence between each wake-up word and one or more candidate devices.

In an example, there may be a correspondence between one wake-up word and devices of a same type. When capturing the wake-up word in the voice information, the vehicle-mounted device may consider that the wake-up word is used to wake up the corresponding device. For example, the wake-up keyword may be "Hey Celia", and the wake-up keyword may be used to wake up a mobile phone.

Optionally, the correspondence between the wake-up word and the candidate device may be preset before the vehicle-mounted device is delivered from a factory, and the correspondence is stored in a storage unit in the vehicle-mounted device. Alternatively, the correspondence between the wake-up word and the candidate device may be preset by the user, and stored in a storage unit of the vehicle-mounted device.

Optionally, the plurality of candidate devices may be divided into a plurality of candidate device subsets based on the wake-up words. For example, Table 2 is an example of correspondences between the wake-up words and the candidate devices. As shown in Table 2, a wake-up word A may be set to correspond to a mobile phone, a tablet computer, and a head unit, and a wake-up word B may be set to correspond to a smart headset and a smart watch.

**Table 2**

| Wake-up word | Candidate device subset |
|---|---|
| Wake-up word A | Mobile phone, tablet computer, and head unit |
| Wake-up word B | Smart headset and smart watch |
| ... | ... |

In an example, there may be an intersection set between candidate device subsets corresponding to different wake-up words, or there may be no intersection set between candidate device subsets corresponding to different wake-up words.

When there is only one candidate device corresponding to the wake-up word, the vehicle-mounted device may determine the candidate device as the target device based on the wake-up word in the voice information. When there are a plurality of candidate devices corresponding to the wake-up word, the vehicle-mounted device may determine, based on the wake-up word, the candidate device subset corresponding to the wake-up word, and then determines the target device in the candidate device subset.

For example, the vehicle-mounted device determines the wake-up word in the voice information; and the vehicle-mounted device determines, based on the wake-up word, a second candidate device subset corresponding to the wake-up word. The plurality of candidate devices belong to the plurality of candidate device subsets, and there is a preset correspondence between the plurality of wake-up words and the plurality of candidate device subsets. The vehicle-mounted device determines the target device from the second candidate device subset based on at least one of the intent information and the user identity information.

For example, when the voice information includes the wake-up word A, according to Table 2, the candidate devices corresponding to the wake-up word A include the mobile phone, the tablet computer, and the head unit. However, content indicated by the intent information is "Turn on the air conditioner", and only the head unit can perform the operation. Therefore, it is determined that the head unit is the target device, and the operation of turning on the air conditioner may be performed by using the head unit.

For another example, it is assumed that the vehicle-mounted device is the head unit, a vehicle-mounted scenario includes a user 1 and a user 2, the user 1 carries a mobile phone 1, and the user 2 carries a mobile phone 2. When the voice information includes the wake-up word A, according to Table 2, the wake-up word A corresponds to the mobile phone 1, the mobile phone 2, and the head unit. When content indicated by the intent information is "View a quantity of steps today", it may be determined that the type of the target device is a mobile phone. Next, the user feature information may be obtained by using the voice information, and it is determined that a source of the voice information is the user 2. Therefore, it is determined that the target device is the mobile phone 2 of the user 2. Therefore, the head unit may indicate the mobile phone 2 to respond to an instruction of the voice information and open a health information interface on the mobile phone.

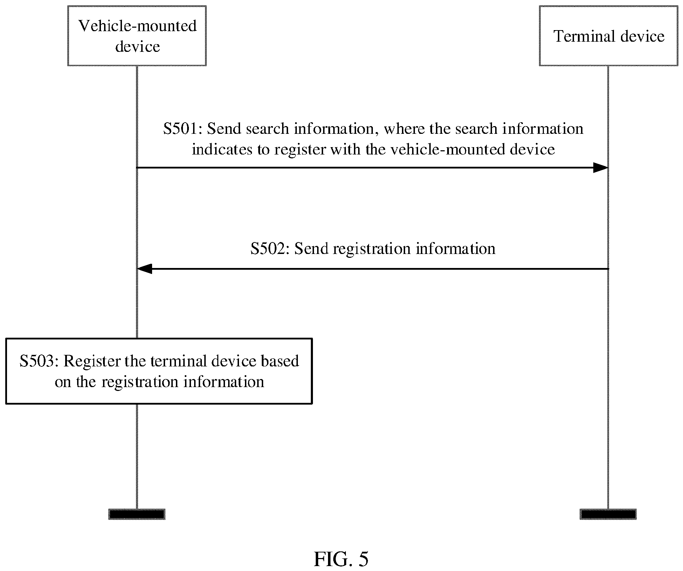

FIG. 5 is a schematic flowchart in which a terminal device registers with a vehicle-mounted device according to an embodiment of this application. As shown in FIG. 5, the solution includes but is not limited to the following content.

S501: A vehicle-mounted device sends search information, and correspondingly, a terminal device receives the search information, where the search information indicates the terminal device to register with the vehicle-mounted device.

Optionally, in a specific condition, the vehicle-mounted device is triggered to send the search information. For example, the vehicle-mounted device detects that a distance between the vehicle-mounted device and the terminal device is less than a preset threshold, or a near field communication (near field communication, NFC) touch occurs between the vehicle-mounted device and the terminal device. NFC is a short-distance high-frequency wireless communication technology, and allows non-contact point-to-point data transmission and data exchange between electronic devices. The NFC touch indicates a case in which electronic devices detect existence of each other by using the NFC and communicate with each other.

In addition, in an example, the specific condition may further include the following scenarios: a scenario in which an operation such as unlocking and power-on or hibernation recovery is performed on the vehicle; a scenario in which an operation of opening a vehicle door is performed; and a scenario in which a vehicle owner account is switched.

Optionally, the search information may alternatively be sent in a broadcast manner. For example, the search information may include searching for a Bluetooth low energy (Bluetooth low energy, BLE) broadcast. The searching for a BLE broadcast may refer to broadcast information sent by using a BLE technology.

S502: The terminal device sends registration information to the vehicle-mounted device, and correspondingly, the vehicle-mounted device receives the registration information, where the registration information is used by the terminal device to register with the vehicle-mounted device.

Optionally, if the terminal device has registered with the vehicle-mounted device, the vehicle-mounted device may ignore the registration information, or the vehicle-mounted device may update the registration information.

Optionally, the registration information may include device information and account information of the terminal device. The device information may include a device type and a MAC address. The account information may include an account identifier of a user, voiceprint feature information of the user, or facial image feature information of the user.

Optionally, the registration information may be sent in a broadcast manner.

S503: The vehicle-mounted device registers the terminal device based on the registration information.

For example, the vehicle-mounted device may locally establish and store a registry, and add the registration information of the terminal device to an entry.

In some examples, a process in which the terminal device registers with the vehicle-mounted device may be completed in a networking process of the terminal device and the vehicle-mounted device. For example, after receiving the registration information, the vehicle-mounted device may send a Wi-Fi name of the vehicle-mounted device to the terminal device. In this case, the terminal device may establish a network connection to the vehicle-mounted device based on the received Wi-Fi name, and communicate with the vehicle-mounted device through Wi-Fi in a subsequent process.

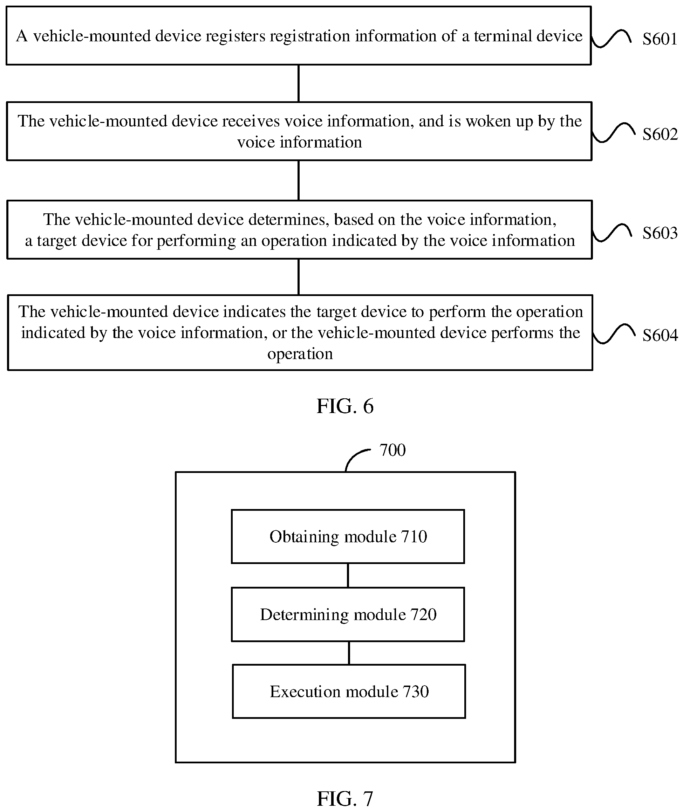

FIG. 6 is a specific flowchart of a device control method according to an embodiment of this application. As shown in FIG. 6, the method includes the following content.

S601: A vehicle-mounted device registers registration information of a terminal device.

For example, a user carries terminal devices on a vehicle, and the terminal devices may include a mobile phone, a tablet computer, and the like. When it is detected that there is a terminal device nearby, the vehicle-mounted device is triggered to send search information through Bluetooth. After receiving the search information, each terminal device responds to the search information, and send the registration information to the vehicle-mounted device. After receiving the registration information, the vehicle-mounted device sends Wi-Fi information to each terminal device, so that a communication connection is established between each terminal device and the vehicle-mounted device.

After registration, each terminal device may disable a wake-up engine of the terminal device, to reduce resource occupation. Subsequently, the vehicle-mounted device is responsible for a wake-up response.

Optionally, after registration, each terminal device may alternatively display, to the user on an interface, an interface indicating whether to disable a wake-up engine. The user determines whether to disable the wake-up engine.

Optionally, after receiving the registration information of the terminal device, the vehicle-mounted device may send indication information to the terminal device, to indicate the terminal device to disable the engine of the terminal device.

S602: The vehicle-mounted device receives voice information, and is woken up by the voice information.

For example, the voice information may include a specific wake-up word, and the vehicle-mounted device is woken up after detecting the wake-up word. Optionally, the vehicle-mounted device may respond to the voice information by using a voice.

S603: The vehicle-mounted device determines, based on the voice information, a target device configured to perform an operation indicated by the voice information.

For example, the vehicle-mounted device obtains, based on the voice information, at least one piece of the following information: intent information, a wake-up word, and user identity information; and the vehicle-mounted device determines the target device based on the foregoing information.

S604: The vehicle-mounted device indicates the target device to perform the operation indicated by the voice information, or the vehicle-mounted device performs the operation.

For example, when the target device is a terminal device other than the vehicle-mounted device, the vehicle-mounted device may send indication information to the target device, to indicate the target device to perform the operation. When the target device is the vehicle-mounted device, the vehicle-mounted device performs the operation.

FIG. 7 is a schematic block diagram of an apparatus 700 according to an embodiment of this application. The apparatus 700 includes an obtaining module 710, a determining module 720, and an execution module 730. The apparatus 700 may be the vehicle-mounted device in the foregoing embodiments, or may be a component (like a chip) of the vehicle-mounted device. The apparatus 700 may implement steps or processes corresponding to the vehicle-mounted device in the foregoing method embodiments.

The obtaining module 710 is configured to obtain voice information of a first user, where the voice information indicates to perform a first operation. The determining module 720 is configured to determine a target device from a plurality of candidate devices based on the voice information, where the plurality of candidate devices include the apparatus 700 and at least one terminal device. The execution module 730 is configured to: when the target device belongs to the at least one terminal device, send indication information to the target device, where the indication information indicates the target device to perform the first operation; or when the target device is the apparatus 700, perform the first operation.

In some examples, the at least one terminal device has registered registration information with the apparatus 700.

In some examples, the registration information includes account information, and the account information includes at least one of the following: an account identifier of a user, voiceprint feature information of the user, and facial image feature information of the user.

In some examples, the registration information further includes device information, and the device information includes at least one of the following: a device type and MAC address information.

In some examples, the obtaining module 710 is further configured to: send search information to the terminal device, where the search information indicates the terminal device to register with the apparatus 700; and receive the registration information from the terminal device.

In some examples, the voice information indicates reference information corresponding to the target device. The reference information includes at least one of the following: intent information, indicating an intent of the voice information; a wake-up word, used to wake up the vehicle-mounted device, where the wake-up word belongs to a plurality of wake-up words, and there is a preset correspondence between the plurality of wake-up words and the plurality of candidate devices; and user identity information, indicating an identity of the first user. The determining module 720 is specifically configured to determine the target device from the plurality of candidate devices based on the reference information.

In some examples, the determining module 720 is specifically configured to: determine a first candidate device subset from the plurality of candidate devices based on the intent information, where a type of a candidate device in the first candidate device subset corresponds to the intent information; and determine the target device from the first candidate device subset based on the user identity information.

In some examples, the determining module 720 is specifically configured to: determine a second candidate device subset corresponding to the wake-up word, where there is a preset correspondence between the wake-up word and a candidate device in the second candidate device subset; and determine the target device from the second candidate device subset based on at least one of the intent information and the user identity information.

In some examples, the determining module 720 is specifically configured to: obtain, based on the voice information, at least one piece of the following user feature information: sound source positioning information of the first user, voiceprint feature information of the first user, and facial image feature information of the first user; and determine the user identity information based on the at least one piece of user feature information.

In some examples, a wake-up engine in the apparatus 700 is enabled, and a wake-up engine in the at least one terminal device is disabled.

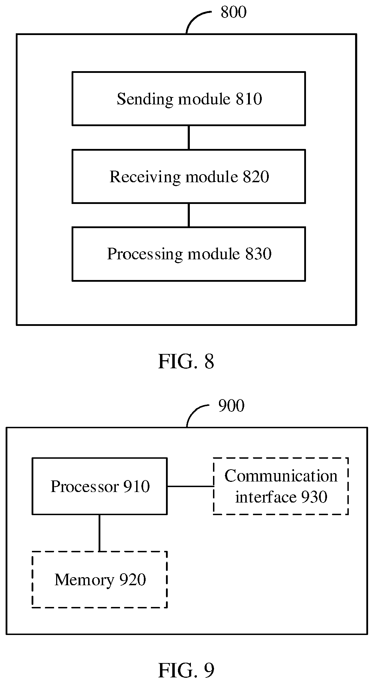

FIG. 8 is a schematic block diagram of an apparatus 800 according to an embodiment of this application. The apparatus 800 includes a sending module 810 and a receiving module 820. Optionally, the apparatus 800 further includes a processing module 830. The apparatus 800 may be the terminal device in the foregoing embodiments, or may be a component (like a chip) of the terminal device.

The sending module 810 is configured to send registration information to a vehicle-mounted device, where the registration information is used by the apparatus 800 to register with the vehicle-mounted device. The receiving module 820 is configured to receive indication information from the vehicle-mounted device, where the indication information indicates the apparatus 800 to perform a first operation, and the first operation includes an operation that is indicated to be performed in voice information of a first user.

In some examples, the registration information includes account information, and the account information includes at least one of the following: an account identifier of a user, voiceprint feature information of the user, and facial image feature information of the user.

In some examples, the registration information further includes device information, and the device information includes at least one of the following: a device type and MAC address information.

In some examples, the apparatus 800 further includes a processing module 830, and the processing module 830 is configured to disable a wake-up engine of the processing module 830 after the registration information is sent, where the wake-up engine is configured to respond to voice information of the user.

In some examples, the receiving module 820 is further configured to receive search information sent by the vehicle-mounted device, where the search information indicates the apparatus 800 to register with the vehicle-mounted device.

FIG. 9 is a schematic block diagram of an apparatus 900 according to another embodiment of this application. The apparatus 900 includes a processor 910. The processor 910 is configured to execute a computer program or instructions stored in a memory 920, or read data stored in the memory 920, to perform the methods in the foregoing method embodiments. Optionally, there are one or more processors 910.

Optionally, as shown in FIG. 9, the apparatus 900 further includes the memory 920. The memory 920 is configured to store a computer program or instructions and/or data. The memory 920 may be integrated with the processor 910, or may be disposed separately. Optionally, there are one or more memories 920.

Optionally, as shown in FIG. 9, the apparatus 900 further includes a communication interface 930. The communication interface 930 is configured to receive and/or send a signal. For example, the processor 910 is configured to control the communication interface 930 to send and/or receive a signal.

In a first solution, the apparatus 900 is configured to implement the operations performed by the vehicle-mounted device in the foregoing method embodiments.

For example, the processor 910 is configured to execute the computer program or the instructions stored in the memory 920, to implement the related operations of the vehicle-mounted device in the foregoing method embodiments. For example, the method performed by the vehicle-mounted device in the embodiments shown in FIG. 4 to FIG. 6 is implemented.

In a second solution, the apparatus 900 is configured to implement the operations performed by the terminal device in the foregoing method embodiments.

For example, the processor 910 is configured to execute the computer program or the instructions stored in the memory 920, to implement the related operations of the terminal device in the foregoing method embodiments. For example, the method performed by the terminal device in the embodiments shown in FIG. 4 to FIG. 6 is implemented.

It should be noted that the apparatus 900 in FIG. 9 may be the vehicle-mounted device or the terminal device in the foregoing embodiments, or may be a chip or a chip system, for example, a system-on-a-chip (system-on-a-chip, SoC). This is not limited herein.

A person of ordinary skill in the art may be aware that units and algorithm steps in the examples described with reference to embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of embodiments.

In addition, function units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A device control method, comprising:
obtaining, by a vehicle-mounted device, voice information of a first user, wherein the voice information indicates to perform a first operation;
determining, by the vehicle-mounted device, a target device from a plurality of candidate devices based on the voice information, wherein the plurality of candidate devices comprise the vehicle-mounted device and at least one terminal device; and
when the target device belongs to the at least one terminal device, sending, by the vehicle-mounted device, indication information to the target device, wherein the indication information indicates the target device to perform the first operation; or
when the target device is the vehicle-mounted device, performing, by the vehicle-mounted device, the first operation.

2. The method according to claim 1, wherein the at least one terminal device has registered registration information with the vehicle-mounted device.

3. The method according to claim 2, wherein the registration information comprises account information, and the account information comprises at least one of the following:
an account identifier of a user, voiceprint feature information of the user, and facial image feature information of the user.

4. The method according to claim 2 or 3, wherein the registration information further comprises device information, and the device information comprises at least one of the following: a device type and media access control MAC address information.

5. The method according to any one of claims 2 to 4, wherein the method further comprises:
sending, by the vehicle-mounted device, search information to the terminal device, wherein the search information indicates the terminal device to register with the vehicle-mounted device; and
receiving, by the vehicle-mounted device, the registration information from the terminal device.

6. The method according to any one of claims 1 to 5, wherein the voice information indicates reference information corresponding to the target device, and the reference information comprises at least one of the following:
intent information, indicating an intent of the voice information;
a wake-up word, used to wake up the vehicle-mounted device, wherein the wake-up word belongs to a plurality of wake-up words, and there is a preset correspondence between the plurality of wake-up words and the plurality of candidate devices; and
user identity information, indicating an identity of the first user.

7. The method according to claim 6, wherein the determining, by the vehicle-mounted device, a target device from a plurality of candidate devices based on the voice information comprises:
determining, by the vehicle-mounted device, a first candidate device subset from the plurality of candidate devices based on the intent information, wherein a type of a candidate device in the first candidate device subset corresponds to the intent information; and
determining, by the vehicle-mounted device, the target device from the first candidate device subset based on the user identity information.

8. The method according to claim 6, wherein the determining, by the vehicle-mounted device, a target device from a plurality of candidate devices based on the voice information comprises:
determining, by the vehicle-mounted device, a second candidate device subset corresponding to the wake-up word, wherein there is a preset correspondence between the wake-up word and a candidate device in the second candidate device subset; and
determining, by the vehicle-mounted device, the target device from the second candidate device subset based on at least one of the intent information and the user identity information.

9. The method according to any one of claims 6 to 8, wherein the method further comprises:
obtaining, by the vehicle-mounted device based on the voice information, at least one piece of the following user feature information: sound source positioning information of the first user, voiceprint feature information of the first user, and facial image feature information of the first user; and
determining, by the vehicle-mounted device, the user identity information based on the at least one piece of user feature information.

10. The method according to any one of claims 1 to 9, wherein a wake-up engine in the vehicle-mounted device is enabled, and a wake-up engine in the at least one terminal device is disabled.

11. A device control method, comprising:
sending, by a terminal device, registration information to a vehicle-mounted device, wherein the registration information is used by the terminal device to register with the vehicle-mounted device; and
receiving, by the terminal device, indication information from the vehicle-mounted device, wherein the indication information indicates the terminal device to perform a first operation, and the first operation comprises an operation that is indicated to be performed in voice information of a first user.

12. The method according to claim 11, wherein the registration information comprises account information, and the account information comprises at least one of the following:
an account identifier of a user, voiceprint feature information of the user, and facial image feature information of the user.

13. The method according to claim 11 or 12, wherein the registration information further comprises device information, and the device information comprises at least one of the following: a device type and media access control MAC address information.

14. The method according to any one of claims 11 to 13, wherein the method further comprises:
disabling, by the terminal device, a wake-up engine of the terminal device after sending the registration information, wherein the wake-up engine is configured to respond to voice information of the user.

15. The method according to any one of claims 11 to 14, wherein the method further comprises:
receiving, by the terminal device, search information sent by the vehicle-mounted device, wherein the search information indicates the terminal device to register with the vehicle-mounted device.

16. A vehicle-mounted device, comprising:
an obtaining module, configured to obtain voice information of a first user, wherein the voice information indicates to perform a first operation;
a determining module, configured to determine a target device from a plurality of candidate devices based on the voice information, wherein the plurality of candidate devices comprise the vehicle-mounted device and at least one terminal device; and
an execution module, configured to: when the target device belongs to the at least one terminal device, send indication information to the target device, wherein the indication information indicates the target device to perform the first operation; or when the target device is the vehicle-mounted device, perform the first operation.

17. The vehicle-mounted device according to claim 16, wherein the at least one terminal device has registered registration information with the vehicle-mounted device.

18. The vehicle-mounted device according to claim 17, wherein the registration information comprises account information, and the account information comprises at least one of the following:
an account identifier of a user, voiceprint feature information of the user, and facial image feature information of the user.

19. The vehicle-mounted device according to claim 17 or 18, wherein the registration information further comprises device information, and the device information comprises at least one of the following: a device type and media access control MAC address information.

20. The vehicle-mounted device according to any one of claims 17 to 19, wherein the obtaining module is further configured to: send search information to the terminal device, wherein the search information indicates the terminal device to register with the vehicle-mounted device; and receive the registration information from the terminal device.

21. The vehicle-mounted device according to any one of claims 16 to 20, wherein the voice information indicates reference information corresponding to the target device, and the reference information comprises at least one of the following:
intent information, indicating an intent of the voice information;
a wake-up word, used to wake up the vehicle-mounted device, wherein the wake-up word belongs to a plurality of wake-up words, and there is a preset correspondence between the plurality of wake-up words and the plurality of candidate devices; and
user identity information, indicating an identity of the first user.

22. The vehicle-mounted device according to claim 21, wherein the determining module is specifically configured to: determine a first candidate device subset from the plurality of candidate devices based on the intent information, wherein a type of a candidate device in the first candidate device subset corresponds to the intent information; and determine the target device from the first candidate device subset based on the user identity information.

23. The vehicle-mounted device according to claim 21, wherein the determining module is specifically configured to: determine a second candidate device subset corresponding to the wake-up word, wherein there is a preset correspondence between the wake-up word and a candidate device in the second candidate device subset; and determine the target device from the second candidate device subset based on at least one of the intent information and the user identity information.

24. The vehicle-mounted device according to any one of claims 21 to 23, wherein the determining module is specifically configured to: obtain, based on the voice information, at least one piece of the following user feature information: sound source positioning information of the first user, voiceprint feature information of the first user, and facial image feature information of the first user; and determine the user identity information based on the at least one piece of user feature information.

25. The vehicle-mounted device according to any one of claims 16 to 24, wherein a wake-up engine in the vehicle-mounted device is enabled, and a wake-up engine in the at least one terminal device is disabled.

26. A terminal device, comprising:
a sending module, configured to send registration information to a vehicle-mounted device, wherein the registration information is used by the terminal device to register with the vehicle-mounted device; and
a receiving module, configured to receive indication information from the vehicle-mounted device, wherein the indication information indicates the terminal device to perform a first operation, and the first operation comprises an operation that is indicated to be performed in voice information of a first user.

27. The terminal device according to claim 26, wherein the registration information comprises account information, and the account information comprises at least one of the following:
an account identifier of a user, voiceprint feature information of the user, and facial image feature information of the user.

28. The terminal device according to claim 26 or 27, wherein the registration information further comprises device information, and the device information comprises at least one of the following: a device type and media access control MAC address information.

29. The terminal device according to any one of claims 26 to 28, wherein the terminal device further comprises a processing module, and the processing module is configured to disable a wake-up engine of the terminal device after the registration information is sent, wherein the wake-up engine is configured to respond to voice information of the user.

30. The terminal device according to any one of claims 26 to 29, wherein the receiving module is further configured to receive search information sent by the vehicle-mounted device, wherein the search information indicates the terminal device to register with the vehicle-mounted device.

31. A vehicle-mounted device, comprising:
a processor, configured to invoke a computer program from a memory, wherein when the computer program is executed, the processor is enabled to perform the method according to any one of claims 1 to 10.

32. A terminal device, comprising:
a processor, configured to invoke a computer program from a memory, wherein when the computer program is executed, the processor is enabled to perform the method according to any one of claims 11 to 15.

33. A vehicle, comprising the vehicle-mounted device according to any one of claims 16 to 25.

34. A computer-readable storage medium, configured to store a computer program, wherein the computer program comprises code used to perform the method according to any one of claims 1 to 10, or comprises code used to perform the method according to any one of claims 11 to 15.

35. A computer program product, wherein the computer program product comprises code used to perform the method according to any one of claims 1 to 10, or the computer program product comprises code used to perform the method according to any one of claims 11 to 15.
